# EUROPEAN PATENT APPLICATION

(11) **EP 4 810 638 A1**
(43) Date of publication of application: **23.09.2026**
(21) Application number: 26165811.6
(22) Date of filing: 18.03.2026
(51) Int. Cl.: C22C 33/02, B22F 1/05, B22F 10/25, B23K 9/00, B23K 10/00, B23K 26/342, B33Y 40/10, B33Y 70/00, C21D 6/00, C22C 38/00, C22C 38/02, C22C 38/04, C22C 38/24, C22C 38/36, C22C 38/40, C22C 38/44, C22C 38/46, C22C 38/52, C22C 38/54, C22C 38/56

(54) **METAL POWDER**

(30) Priority: 21.03.2025 JP 2025046206
(71) Applicant: Daido Steel Co., Ltd., Nagoya-shi Aichi 461-8581 (JP)
(72) Inventor: OGAWA, Tsubasa, Nagoya-shi, Aichi 457-8545 (JP); HATANAKA, Yui, Nagoya-shi, Aichi 457-8545 (JP); KUMAGAI, Yoshiki, Nagoya-shi, Aichi 457-8545 (JP); YAMASHITA, Masakazu, Nagoya-shi, Aichi 457-8545 (JP)
(74) Representative: Diehl & Partner

(57) **Abstract**

The present invention relates to a metal powder containing, in mass%: 1.5% ≤ C ≤ 3.5%; 0.05% ≤ Si ≤ 2.0%; 0.05% ≤ Mn ≤ 2.0%; 0.1% ≤ Ni ≤ 5.0%; 10% ≤ Cr ≤ 20%; 7.0% ≤ V ≤ 15%; and 0.005% ≤ N ≤ 0.4%, with a balance being Fe and inevitable impurities.

## Description

### TECHNICAL FIELD

The present invention relates to a metal powder, and more particularly to a metal powder that can be used for forming a shaped layer on a surface of a substrate in a metal member such as a tool.

### BACKGROUND ART

In various tools such as cutlery, a chipping tool, or a cutting tool, in order to compensate for properties of constituent materials of a cold tool steel or the like and to improve performance of the tool, a coating made of a metal material having high hardness and excellent wear resistance may be formed at a portion where strength is required such as a cutting edge. In order to form the coating, for example, a method of melting a metal powder such as a high-speed steel powder to form a shaped layer on a surface of a substrate is used. As a method of forming a shaped layer by using such a type of metal powder, overlay welding using a laser or a plasma arc as a heat source is used.

A metal powder used for forming a coating having high wear resistance is disclosed in, for example, Patent Literature 1. Patent Literature 1 discloses a powder metal material for use in a thermal spraying technique, the powder metal material containing, based on a total weight of the powder metal material, 3.0 wt% to 7.0 wt% of carbon, 10.0 wt% to 25.0 wt% of chromium, 1.0 wt% to 5.0 wt% of tungsten, 3.5 wt% to 7.0 wt% of vanadium, 1.0 wt% to 5.0 wt% of molybdenum, 0.5 wt% or less of oxygen, and at least 40.0 wt% of iron.

Patent Literature 1: JP2015-515542A

### SUMMARY OF INVENTION

In metal members such as a tool, a coating that is formed on a surface of a substrate by using a metal powder such as high-speed steel for the purpose of improving wear resistance has high hardness and exhibits a high effect of improving the wear resistance. On the other hand, in order to prevent cracks of these metal members, the coating is required to have high toughness. However, in the case of a metal powder used in the related art, such as high-speed steel, although a shaped layer having high hardness can be formed by overlay welding or the like, it is difficult to provide the shaped layer with high toughness in addition to high hardness. It is desired to develop a metal powder from which a shaped layer having both high hardness and high toughness can be formed.

An object of the present invention is to provide a metal powder from which a shaped layer having both high hardness and high toughness can be formed.

In order to achieve the above object, a metal powder according to the present invention has the following configuration.
[1] A metal powder includes, in mass%: $1.5 % \leq C \leq 3.5 % ;$ $0.05 % \leq Si \leq 2.0 % ;$ $0.05 % \leq Mn \leq 2.0 % ;$ $0.1 % \leq Ni \leq 5.0 % ;$ $10 % \leq Cr \leq 20 % ;$ $7.0 % \leq V \leq 15 % ;$ and $0.005 % \leq N \leq 0.4 % ,$ with a balance being Fe and inevitable impurities.
[2] The metal powder according to [1] may further include, in mass%, at least one of: $0 % < Mo \leq 1.5 % ,$ $0 % < W \leq 2.0 % ,$ $0 % < Ti \leq 2.0 % ,$ $0 % < Ta \leq 3.0 % ,$ $0 % < Nb \leq 3.0 % ,$ and $0 % < Zr \leq 3.0 % .$
[3] The metal powder according to [1] or [2] may further include, in mass% at least one of: $0 % < Cu \leq 2.0 % ,$ and $0 % < Co \leq 2.0 % .$
[4] The metal powder according to any one of [1] to [3] may further include, in mass% at least one of: $0 % < Al \leq 1.3 % ,$ and $0 % < B \leq 0.2 % .$
[5] The metal powder according to any one of [1] to [4] may satisfy, in mass%: $P \leq 0.05 % ;$ and $S \leq 0.05 % .$

Since the metal powder according to the present invention having the above configuration [1] contains the above predetermined amounts of C, Si, Mn, Ni, Cr, V, and N, a shaped layer having both high hardness and high toughness equivalent to those of cold tool steel can be formed by overlay welding or the like. In particular, due to an effect of a balance among the contents of C, Cr, V, and N, the shaped layer has both high hardness and high toughness. Further, since a predetermined amount of Ni is contained, a high effect of improving toughness can be obtained. Since a shaped layer using the present metal powder is formed on a surface of a metal member such as a tool, it is possible to improve wear resistance and to prevent cracks in the metal member. Further, since the shaped layer has high corrosion resistance, it is possible to maintain a state where its wear resistance is excellent and cracking is prevented even in an environment where corrosion is likely to occur. Si and Mn are elements effective for deoxidation.

In the above aspect [2], the metal powder contains a predetermined amount of at least one of Mo, W, Ti, Ta, Nb, and Zr. These elements are elements effective for improving the hardness of the shaped layer by formation of a carbide. On the other hand, in the case where the content of each element is reduced to be equal to or smaller than the above predetermined upper limit, high toughness is ensured in the shaped layer.

In the above aspect [3], the metal powder contains a predetermined amount of at least one of Cu and Co. Cu and Co are elements effective for improving the toughness of the shaped layer. On the other hand, in the case where the content of each element is reduced to be equal to or smaller than the above predetermined upper limit, high processability is ensured in the shaped layer.

In the above aspect [4], the metal powder contains a predetermined amount of at least one of Al and B. Al is an element effective for deoxidation. On the other hand, in the case where the content of Al is reduced to be equal to or smaller than the above predetermined upper limit, high toughness and processability are ensured in the shaped layer. B segregates at grain boundaries and has an effect of preventing a decrease in impact resistance of the shaped layer. On the other hand, in the case where B is excessively added, the impact resistance rather decreases due to a decrease in toughness, but in the case where the content of B is reduced to be equal to or smaller than the above predetermined upper limit, high toughness can be ensured.

In the above aspect [5], the contents of P and S are each reduced to be equal to or smaller than a predetermined upper limit. Accordingly, a decrease in toughness of the shaped layer due to the incorporation of a large amount of P and S is avoided.

### DESCRIPTION OF EMBODIMENTS

Hereinafter, a metal powder according to an embodiment of the present invention is described in detail. The metal powder according to the present embodiment is formed as a powder of an alloy material having a predetermined component composition. In the present specification, a content of each element is expressed in unit of mass%. In addition, various properties indicate values in the atmosphere at room temperature (about 20°C).

### [Component Composition of Metal Powder]

The metal powder according to the embodiment of the present invention contains the following predetermined amounts of C, Si, Mn, Ni, Cr, V, and N, with the balance being Fe and inevitable impurities. An application of the metal powder according to the present embodiment is not limited, and the metal powder can be particularly suitably used for forming a shaped layer by overlay welding.$1.5 % \leq C \leq 3.5 %$

In the case of forming a shaped layer by overlay welding or the like using the metal powder, the shaped layer has a structure in which precipitates of a carbide or the like are generated in a matrix mainly made of martensite. In this structure, C dissolves in the matrix to strengthen the matrix, and combines with V, Cr, and Mo, W, Ti, Ta, Nb, and Zr that can be added as optional elements to form a hard carbide. The carbide has a high effect of improving wear resistance by improving hardness of the shaped layer. In the case of 1.5% ≤ C, the effect of containing C can be sufficiently obtained. The content of C is more preferably 2.0% ≤ C, and further preferably 2.5% ≤ C.

On the other hand, in the case where a large amount of C is contained, the precipitated carbide is coarsened, and the toughness of the shaped layer decreases. From the viewpoint of ensuring high toughness, C ≤ 3.5%. The content of C is more preferably C ≤ 3.2%, and further preferably C ≤ 3.0%.$0.05 % \leq Si \leq 2.0 %$

Si is an element effective for deoxidation. In the case of 0.05% ≤ Si, a sufficient effect of promoting deoxidation can be obtained. The content of Si is more preferably 0.15% ≤ Si, and further preferably 0.5% ≤ Si.

On the other hand, in the case where a large amount of Si is added, the processability and the toughness of the shaped layer decrease. From the viewpoint of maintaining high processability and toughness, Si ≤ 2.0%. The content of Si is more preferably Si ≤ 1.5% and further preferably Si ≤ 1.2%. The high processability is important when a shaped layer obtained by overlay welding or the like is subjected to machining such as chipping afterward.$0.05 % \leq Mn \leq 2.0 %$

Similar to Si, Mn is an element effective for deoxidation. In the case of 0.05% ≤ Mn, a sufficient effect of promoting deoxidation can be obtained. The content of Mn is more preferably 0.15% ≤ Mn, and further preferably 0.5% ≤ Mn.

On the other hand, in the case where a large amount of Mn is added, the processability and the toughness decrease. From the viewpoint of maintaining high processability and toughness, Mn ≤ 2.0%. The content of Mn is more preferably Mn ≤ 1.5% and further preferably Mn ≤ 1.0%.$0.1 % \leq Ni \leq 5.0 %$

Ni is an element effective for improving the toughness of the shaped layer. This is because the matrix of the shaped layer is composed mainly of martensite, but the addition of Ni increases the amount of residual austenite, and the hardness of the matrix portion is reduced to be low, so that the effect of improving the toughness due to a contribution of the matrix is improved. In the case where 0.1% ≤ Ni, the effect of improving the toughness can be sufficiently obtained. The content of Ni is more preferably 0.3% ≤ Ni, and further preferably 0.5% ≤ Ni.

On the other hand, in the case where a large amount of Ni is contained, the hardness of the shaped layer decreases. From the viewpoint of maintaining high hardness, Ni ≤ 5.0%. The content of Ni is more preferably Ni ≤ 3.0% and further preferably Ni ≤ 1.0%.$10 % \leq Cr \leq 20 %$

Cr contributes to the improvement of the hardness of the shaped layer by forming a carbide. In addition, it has a high effect of improving corrosion resistance. In the case where 10% ≤ Cr, a sufficient effect of improving the hardness and the corrosion resistance can be obtained. The content of Cr is more preferably 12% ≤ Cr, and further preferably 13% ≤ Cr.

On the other hand, in the case where a large amount of Cr is added, the hardness of the shaped layer decreases. In the case of Cr ≤ 20%, high hardness can be maintained. The content of Cr is more preferably Cr ≤ 18%, and further preferably Cr ≤ 15%.$7.0 % \leq V \leq 15 %$

V contributes to the improvement of the hardness by bonding to C to form a carbide. In the shaped layer using the metal powder according to the present embodiment, a plurality of metals form carbides and contribute to the improvement of the hardness, and among the various metals, V particularly forms an extremely hard and fine carbide, and thus exhibits an important contribution to the improvement of the hardness. In addition, when the shaped layer is formed by overlay welding or the like, a carbide of V of a primary crystal plays an important role in controlling the structure during solidification of the molten metal material. From the viewpoint of a balance with the content of C, when 7.0% ≤ V, the effect of the formation of the carbide of V can be sufficiently obtained. The content of V is more preferably 9.0% ≤ V, further preferably 10% ≤ V, and still further preferably 11% ≤ V

On the other hand, in the case where a large amount of V is added, the carbide is coarsened and the toughness decreases. From the viewpoint of maintaining high toughness, V ≤ 15%. The content of V is more preferably V ≤ 13%, and further preferably V ≤ 12%.$0.005 % \leq N \leq 0.4 %$

N has an effect of improving the hardness by forming a carbonitride. In the case of 0.005% ≤ N, a high effect of improving the hardness can be obtained. The content of N is more preferably 0.05% ≤ N, and further preferably 0.10% ≤ N.

On the other hand, in the case where a large amount of N is contained, the toughness decreases. In addition, the production of the metal powder is likely to be difficult. From the viewpoint of avoiding these, N ≤ 0.4%. The content of N is more preferably N ≤ 0.3%, and further preferably N ≤ 0.2%.

The metal powder according to the present embodiment may contain only the above predetermined amounts of C, Si, Mn, Ni, Cr, V, and N as essential elements in addition to Fe, or may also contain at least one of the following predetermined amounts of Mo, W, Cu, Co, Ti, Al, Ta, Nb, Zr, and B as optional elements. In particular, at least one of the following Mo, W, Ti, Ta, Nb, and Zr can be contained as an element having an effect of improving hardness of the shaped layer. In addition, at least one of the following Cu and Co can be contained as an element having an effect of improving toughness of the shaped layer. Further, at least one of the following Al and B can be contained as an element that mainly exhibits other effects.$0 % < Mo \leq 1.5 %$

Mo is an element effective in forming a carbide and improving the hardness. Mo exhibits a high effect of improving the hardness even when added in a small amount, and thus a lower limit of the content is not particularly specified. However, in the case of 0.1% ≤ Mo and further preferably 0.5% ≤ Mo, a high effect of improving the hardness can be obtained.

On the other hand, in the case where a large amount of Mo is added, the toughness decreases. From the viewpoint of maintaining high toughness, Mo ≤ 1.5%. The content of Mo is more preferably Mo ≤ 1.2% and further preferably Mo ≤ 1.0%.$0 % < W \leq 2.0 %$

Similar to Mo, W is an element effective for forming a carbide and improving the hardness. W exhibits a high effect of improving the hardness even when added in a small amount, and thus a lower limit of the content is not particularly specified. However, in the case of 0.1% ≤ W and further preferably 1.0% ≤ W, a high effect of improving the hardness can be obtained.

On the other hand, in the case where a large amount of W is added, the toughness decreases. From the viewpoint of maintaining high toughness, W ≤ 2.0%. The content of W is more preferably W ≤ 1.8%, and further preferably W ≤ 1.5%.$0 % < Cu \leq 2.0 %$

Similar to Ni, Cu is an element effective for improving the toughness. Cu exhibits a high effect of improving the toughness even when added in a small amount, and thus a lower limit of the content is not particularly specified. However, in the case of 0.01 % ≤ Cu and further preferably 0.02% ≤ Cu, a high effect of improving the toughness can be obtained.

On the other hand, in the case where a large amount of Cu is added, the processability decreases. From the viewpoint of maintaining high processability, Cu ≤ 2.0%. The content of Cu is more preferably Cu ≤ 1.0%, and further preferably Cu ≤ 0.5%.$0 % < Co \leq 2.0 %$

Similar to Ni and Cu, Co is an element effective for improving the toughness. Co exhibits a high effect of improving the toughness even when added in a small amount, and thus a lower limit of the content is not particularly specified. However, in the case of 0.01% ≤ Co and further preferably 0.02% ≤ Co, a high effect of improving the toughness can be obtained.

On the other hand, in the case where a large amount of Co is added, the processability decreases. From the viewpoint of maintaining high processability, Co ≤ 2.0%. The content of Co is more preferably Co ≤ 1.0% and further preferably Co ≤ 0.5%.$0 % < Ti \leq 2.0 %$

Similar to Mo and W, Ti is an element effective for forming a carbide and improving the hardness. Ti exhibits a high effect of improving the hardness even when added in a small amount, and thus a lower limit of the content is not particularly specified. However, in the case of 0.1% ≤ Ti and further preferably 0.5% ≤ Ti, a high effect of improving the hardness can be obtained.

On the other hand, in the case where a large amount of Ti is added, the toughness decreases. From the viewpoint of maintaining high toughness, Ti ≤ 2.0%. The content of Ti is more preferably Ti ≤ 1.0%. Less than 0.01% of Ti is considered as an inevitable impurity. $0 % < Al \leq 1.3 %$

Similar to Si and Mn, Al is an element effective for deoxidation. Al exhibits a high effect of promoting the deoxidation even when added in a small amount, and thus a lower limit of the content is not particularly specified. However, in the case of 0.05% ≤ Al and further preferably 0.1% ≤ Al, a high effect of promoting the deoxidation can be obtained.

On the other hand, in the case where a large amount of Al is added, the processability and the toughness decrease. From the viewpoint of maintaining high processability and toughness, Al ≤ 1.3%. The content of Al is more preferably Al ≤ 0.3%. Less than 0.01% of Al is considered as an inevitable impurity.$0 % < Ta \leq 3.0 %$

Similar to Mo, W and Ti, Ta is an element effective for forming a carbide and improving the hardness. Ta exhibits a high effect of improving the hardness even when added in a small amount, and thus a lower limit of the content is not particularly specified. However, in the case of 0.05% ≤ Ta and further preferably 0.1% ≤ Ta, a high effect of improving the hardness can be obtained.

On the other hand, in the case where a large amount of Ta is added, the toughness decreases. From the viewpoint of maintaining high toughness, Ta ≤ 3.0%. The content of Ta is more preferably Ta ≤ 2.0%. Less than 0.1% of Ta is considered as an inevitable impurity.$0 % < Nb \leq 3.0 %$

Similar to Mo, W, Ti, and Ta, Nb is an element effective for forming a carbide and improving the hardness. Nb exhibits a high effect of improving the hardness even when added in a small amount, and thus a lower limit of the content is not particularly specified. However, in the case of 0.05% ≤ Nb and further preferably 0.1% ≤ Nb, a high effect of improving the hardness can be obtained.

On the other hand, in the case where a large amount of Nb is added, the toughness decreases. From the viewpoint of maintaining high toughness, Nb ≤ 3.0%. The content of Nb is more preferably Nb ≤ 2.0%. Less than 0.1% of Nb is considered as an inevitable impurity.$0 % < Zr \leq 3.0 %$

Similar to Mo, W, Ti, Ta, and Nb, Zr is an element effective for forming a carbide and improving the hardness. Zr exhibits a high effect of improving the hardness even when added in a small amount, and thus a lower limit of the content is not particularly specified. However, in the case of 0.05% ≤ Zr and further preferably 0.1% ≤ Zr, a high effect of improving the hardness can be obtained.

On the other hand, in the case where a large amount of Zr is added, the toughness decreases. From the viewpoint of maintaining high toughness, Zr ≤ 3.0%. The content of Zr is more preferably Zr ≤ 2.0%. Less than 0.01% of Zr is considered as an inevitable impurity.$0 % < B \leq 0.2 %$

B segregates at grain boundaries and plays a role in preventing a decrease in impact value (decrease in impact resistance) of the shaped layer. In particular, in the case where the content of P is large, the effect is enhanced. B exhibits a high effect of preventing the decrease in impact value even when added in a small amount, and thus a lower limit of the content is not particularly specified. However, in the case of 0.0005% ≤ B, a high effect can be obtained.

On the other hand, B dissolves in the matrix in the shaped layer and has an action of strengthening the matrix, and therefore, in the case where B is added in a large amount, the toughness can be decreased. When the toughness decreases, the impact value decreases. From the viewpoint of preventing a decrease in toughness and ensuring a high impact value, B ≤ 0.2%. The content of B is more preferably B ≤ 0.02% and further preferably B ≤ 0.002%.

As described above, the metal powder according to the present embodiment contains the above predetermined amounts of C, Si, Mn, Ni, Cr, V, and N, with the balance being Fe and inevitable impurities. The metal powder may further contain the predetermined amount of at least one of Mo, W, Cu, Co, Ti, Al, Ta, Nb, Zr, and B as an optional element. The inevitable impurities are allowed to be contained as long as the properties of the metal powder or the shaped layer formed of the metal powder are not greatly impaired. Typical examples of the inevitable impurities include P and S, and the contents thereof are preferably reduced to the following ranges.$P \leq 0.05 % , S \leq 0.05 %$

In the case where a large amount of P and S is contained in the metal powder, the toughness of the shaped layer is decreased. However, in the case where the amount is about P ≤ 0.05% or S ≤ 0.05%, high toughness can be maintained even when it is contained. By allowing the content in the range of P ≤ 0.05% and S ≤ 0.05%, an increase in production cost of the metal powder due to an excessive increase in purity can be prevented.

In addition to P and S, examples of inevitable impurities that can be contained in the metal powder include O, Te, As, Sn, Sb, Se, Pb, Ce, Bi, Zn, Hg, Mg, and Ca. The content of these impurity elements is preferably reduced to less than 0.05% for each element. However, the contribution of oxidation to the surface of the metal powder is excluded.

### [Properties of Metal Powder]

Since the metal powder according to the present embodiment has the above component composition, a shaped layer having both high hardness and high toughness is obtained by forming the shaped layer through melting and solidification by overlay welding or the like. In particular, high hardness and high toughness can be obtained by the effect of the balance among the contents of C, Cr, V, and N. In particular, the formation of the carbide of V can provide a high effect of improving the hardness. In addition, mainly because a sufficient amount of Ni is contained, a high effect of improving the toughness can be obtained. Further, since a sufficient amount of Cr is contained, the shaped layer also has excellent corrosion resistance.

For example, the hardness can be preferably 630 HV or more and further preferably 650 HV or more in terms of cross-sectional hardness of an overlay welded layer. This hardness is comparable to that of cold tool steel. In addition, the toughness can be preferably 7 J/cm² or more and further preferably 9 J/cm² or more in terms of an impact value obtained by a Charpy impact test.

Since the shaped layer formed of the metal powder has both high hardness and high toughness, the shaped layer has excellent wear resistance and is less likely to crack. Therefore, the metal powder can be suitably used for forming a shaped layer by overlay welding on various metal members including tools such as cutlery, a chipping tool, or a cutting tool. Further, since the shaped layer has high corrosion resistance and the state of the shaped layer having high hardness and high toughness is satisfactorily maintained even in a corrosive environment, the metal powder can be particularly suitably applied to a metal member that is to be used in an environment where corrosion is likely to occur. However, the application of the metal powder according to the present embodiment is not limited to the overlay welding to a metal member such as a tool, and the metal powder can be used for various applications such as formation of a coating by a method other than overlay welding including thermal spraying, and additive manufacturing.

A particle diameter of the metal powder according to the present embodiment is not particularly limited. For example, a form in which a median diameter d50 is 75 µm or more and 200 µm or less can be exemplified.

A method for producing the metal powder according to the present embodiment is not particularly limited, and for example, the metal powder can be produced by melting an alloy material and pulverizing the alloy material by using an atomization method. As the atomization method, a water atomization method or a gas atomization method can be used. The obtained metal powder may be appropriately sieved. In the case of performing sieving, for example, particles having a particle diameter larger than 250 µm and particles having a particle diameter smaller than 5 µm may be removed.

A method for forming the shaped layer from the metal powder according to the present embodiment is not particularly limited. For example, overlay welding using laser metal deposition (LMD) or plasma transferred arc (PTA) welding may be performed.

### EXAMPLES

Hereinafter, the present invention is described more specifically with reference to Examples. Note that, the present invention is not limited by these Examples.

### [Preparation of Sample]

As metal powders according to Examples 1 to 25 and Comparative Examples 1 to 15, metal powders containing respective component elements at the concentrations shown in Table 1, with the balance being Fe and inevitable impurities, were prepared. At this time, an alloy having a predetermined component composition ratio was melted, and a metal powder was obtained by a gas atomization method using nitrogen.

Further, in order to perform various evaluations, a shaped article was prepared by using each metal powder prepared above. The shaped article was prepared by overlay welding using plasma transferred arc (PTA) welding. Specifically, a shaped article having a predetermined dimension was prepared by stacking a plurality of shaped layers by overlay welding on a surface of a substrate. The dimensions of the shaped article were set for each evaluation test as shown below.

### [Evaluation Method]

The shaped article prepared from each metal powder as described above was subjected to the following evaluations. Each evaluation was performed at room temperature in the atmosphere.

### (1) Measurement of Impact Value

As an index of the toughness, the impact value was measured. A shaped article of B6 mm × W12 mm × L60 mm was formed on a surface of a substrate made of an SS400 material. There were five shaped layers. The shaped article was subjected to chipping to prepare a test piece of B5 mm × W10 mm × L55 mm and having a surface roughness of 0.25 mm or less. Further, a C notch (depth: 2 mm, 10R) was formed in the test piece. The test piece was subjected to a Charpy impact test to measure the impact value. Cases where the impact value was 9.0 J/cm² or more were evaluated as particularly large (A), and cases where the impact value was 7.0 J/cm² or more and less than 9.0 J/cm² were evaluated as large (B). On the other hand, cases where the impact value was less than 7.0 J/cm² were evaluated as small (C). The larger the impact value, the higher the toughness. Here, B, W, and L represent thickness, width, and length, respectively. The same shall apply hereinafter.

### (2) Hardness Measurement

A shaped article of B6 mm × W30 mm × L30 mm was formed on a surface of a substrate made of an SS400 material. There were five shaped layers. In a cross section obtained by cutting this shaped article, hardness measurement was performed at a position of a depth of 1 mm from a surface layer. The hardness was measured in accordance with the Vickers hardness test in JIS Z2245:2016. The measurement was performed at 12 points set at a pitch of 0.3 mm along a direction of an overlay welding pass. Among the 12 measurement points, 10 points excluding two points having the smallest value and the largest value were averaged to obtain an average value, which was recorded as a hardness value. Cases where the obtained hardness value was 650 HV or more were evaluated as particularly high (A), and cases where the hardness value was 630 HV or more and less than 650 HV were evaluated as high (B). On the other hand, cases where the hardness value was less than 630 HV were evaluated as low (C).

### (3) Evaluation of Wear Resistance

The wear resistance was evaluated by a rubber wheel-type sediment wear test. A shaped article of B6 mm × W37 mm × L45 mm was formed on a surface of a substrate made of an SS400 material. This shaped article was subjected to chipping and combined with a substrate (thickness: 7 mm) to obtain a test piece of B10 mm × W20 mm to W25 mm × L45 mm. Further, the surface of the test piece was polished and finished such that the surface roughness was uniform. This test piece was subjected to a rubber wheel-type sediment wear test in accordance with ASTM G65. A rotation speed of a rubber wheel was set to 200 rpm, and a test load was set to 6.6 kgf. The wear resistance was evaluated based on a wear loss amount when the number of rotations reached 4,800. Cases where the wear loss amount was 0.30 g or less were evaluated as high wear resistance (A). On the other hand, cases where the wear loss amount was more than 0.30 g were evaluated as low wear resistance (B). The high wear resistance reflects the high hardness.

### [Test Results]

Table 1 shows the component compositions of the metal powders for Examples 1 to 25 and Comparative Examples 1 to 15. Table 2 shows the results of the evaluations.

**Table 1**

| | | Component element (mass%) | | | | | | | | |
|---|---|---|---|---|---|---|---|---|---|---|
| | | C | Si | Mn | Ni | Cr | V | N | Mo | W |
| | 1 | 2.52 | 0.82 | 0.60 | 0.5 | 13.0 | 11.3 | 0.1 | 0.84 | 1.3 |
| | 2 | 2.04 | 1.13 | 0.60 | 0.5 | 13.0 | 9.1 | 0.2 | 0.82 | 1.3 |
| | 3 | 1.50 | 1.00 | 0.60 | 0.5 | 13.0 | 8.0 | 0.1 | 0.80 | 1.3 |
| | 4 | 1.80 | 1.00 | 0.60 | 0.5 | 13.0 | 7.0 | 0.1 | 0.80 | 1.3 |
| | 5 | 3.00 | 1.00 | 0.60 | 0.5 | 13.0 | 15.0 | 0.1 | 0.80 | 1.3 |
| | 6 | 2.50 | 1.00 | 0.60 | 0.1 | 13.0 | 11.5 | 0.1 | 0.84 | 1.3 |
| | 7 | 2.50 | 1.00 | 0.60 | 5.0 | 13.0 | 11.5 | 0.1 | 0.82 | 1.3 |
| | 8 | 2.50 | 1.00 | 0.60 | 0.5 | 10.0 | 11.5 | 0.1 | 0.82 | 1.3 |
| | 9 | 3.50 | 1.00 | 0.60 | 0.5 | 20.0 | 9.0 | 0.1 | 0.80 | 1.3 |
| | 10 | 2.50 | 1.00 | 0.60 | 0.5 | 13.0 | 11.5 | 0.005 | 0.80 | 1.3 |
| | 11 | 2.00 | 1.00 | 0.60 | 0.5 | 13.0 | 9.0 | 0.4 | 0.80 | 1.3 |
| | 12 | 2.52 | 0.82 | 0.60 | 0.5 | 13.0 | 8.0 | 0.1 | 0.84 | 1.3 |
| Ex. | 13 | 2.52 | 0.82 | 0.60 | 0.5 | 13.0 | 13.0 | 0.1 | 0.84 | 1.3 |
| | 14 | 2.52 | 0.82 | 0.60 | 0.3 | 13.0 | 11.3 | 0.1 | 0.84 | 1.3 |
| | 15 | 2.52 | 0.82 | 0.60 | 1.0 | 13.0 | 11.3 | 0.1 | 0.84 | 1.3 |
| | 16 | 2.52 | 0.82 | 0.60 | 0.5 | 13.0 | 11.3 | 0.1 | - | 1.3 |
| | 17 | 2.52 | 0.82 | 0.60 | 0.5 | 13.0 | 11.3 | 0.1 | 0.84 | - |
| | 18 | 2.52 | 0.82 | 0.60 | 0.5 | 13.0 | 11.3 | 0.1 | 0.84 | 1.3 |
| | 19 | 2.50 | 1.00 | 0.60 | 0.5 | 13.0 | 11.5 | 0.1 | 0.82 | 1.3 |
| | 20 | 2.50 | 1.00 | 0.60 | 0.5 | 13.0 | 11.5 | 0.1 | 0.82 | 1.3 |
| | 21 | 2.50 | 1.00 | 0.60 | 0.5 | 13.0 | 11.5 | 0.1 | 0.82 | 1.3 |
| | 22 | 2.50 | 1.00 | 0.60 | 0.5 | 13.0 | 11.5 | 0.1 | 0.82 | 1.3 |
| | 23 | 2.50 | 1.00 | 0.60 | 0.5 | 13.0 | 11.5 | 0.1 | 0.82 | 1.3 |
| | 24 | 2.50 | 1.00 | 0.60 | 0.5 | 13.0 | 11.5 | 0.1 | 0.82 | 1.3 |
| | 25 | 2.50 | 1.00 | 0.60 | 0.5 | 13.0 | 11.5 | 0.1 | 0.82 | 1.3 |
| | 1 | 1.40 | 1.00 | 0.60 | 0.5 | 13.0 | 6.0 | 0.1 | 0.82 | 1.3 |
| | 2 | 3.80 | 0.88 | 0.60 | 0.5 | 13.0 | 16.7 | 0.1 | 0.82 | 1.3 |
| | 3 | 2.50 | 1.00 | 0.60 | 0.05 | 13.0 | 11.5 | 0.1 | 0.82 | 1.3 |
| | 4 | 2.50 | 1.00 | 0.60 | 6.0 | 13.0 | 11.5 | 0.1 | - | 1.3 |
| | 5 | 2.50 | 1.00 | 0.60 | 0.5 | 9.0 | 11.5 | 0.1 | 0.82 | - |
| | 6 | 2.50 | 1.00 | 0.60 | 0.5 | 21.0 | 11.5 | 0.1 | 0.82 | 1.3 |
| | 7 | 2.50 | 1.00 | 0.60 | 0.5 | 13.0 | 11.5 | 0.0 | 0.82 | 1.3 |
| Comp. Ex. | 8 | 2.50 | 1.00 | 0.60 | 0.5 | 13.0 | 11.5 | 0.5 | 0.82 | 1.3 |
| | 9 | 2.50 | 2.50 | 0.60 | 0.5 | 13.0 | 11.5 | 0.1 | 0.82 | 1.3 |
| | 10 | 2.50 | 1.00 | 2.50 | 0.5 | 13.0 | 11.5 | 0.1 | 0.82 | 1.3 |
| | 11 | 2.50 | 1.00 | 0.60 | 0.5 | 13.0 | 11.5 | 0.1 | 2.00 | 1.3 |
| | 12 | 2.50 | 1.00 | 0.60 | 0.5 | 13.0 | 11.5 | 0.1 | 0.82 | 3.00 |
| | 13 | 2.50 | 1.00 | 0.60 | 0.5 | 13.0 | 11.5 | 0.1 | 0.82 | 1.3 |
| | 14 | 2.50 | 1.00 | 0.60 | 0.5 | 13.0 | 11.5 | 0.1 | 0.82 | 1.3 |
| | 15 | 2.60 | 0.50 | 0.30 | - | 17.8 | 7.4 | - | 0.36 | - |

**Table 1 (Continued)**

| | | Component element (mass%) | | | | | | | | | |
|---|---|---|---|---|---|---|---|---|---|---|---|
| | | Cu | Co | Ti | Al | Ta | Nb | Zr | B | P | S |
| | 1 | 0.03 | 0.02 | < 0.01 | < 0.01 | < 0.1 | < 0.1 | < 0.01 | 0.001 | 0.015 | 0.005 |
| | 2 | 0.03 | 0.02 | < 0.01 | < 0.01 | < 0.1 | < 0.1 | < 0.01 | 0.001 | 0.015 | 0.005 |
| | 3 | 0.03 | 0.02 | < 0.01 | < 0.01 | < 0.1 | < 0.1 | < 0.01 | 0.001 | 0.015 | 0.005 |
| | 4 | 0.03 | 0.02 | < 0.01 | < 0.01 | < 0.1 | < 0.1 | < 0.01 | 0.001 | 0.015 | 0.005 |
| | 5 | 0.03 | 0.02 | < 0.01 | < 0.01 | < 0.1 | < 0.1 | < 0.01 | - | 0.015 | 0.005 |
| | 6 | 0.03 | 0.02 | < 0.01 | < 0.01 | < 0.1 | < 0.1 | < 0.01 | - | 0.015 | 0.005 |
| | 7 | 0.03 | 0.02 | < 0.01 | < 0.01 | < 0.1 | < 0.1 | < 0.01 | - | 0.015 | 0.005 |
| | 8 | 0.03 | 0.02 | < 0.01 | < 0.01 | < 0.1 | < 0.1 | < 0.01 | - | 0.015 | 0.005 |
| | 9 | 0.03 | 0.02 | < 0.01 | < 0.01 | < 0.1 | < 0.1 | < 0.01 | - | 0.015 | 0.005 |
| | 10 | 0.03 | 0.02 | < 0.01 | < 0.01 | < 0.1 | < 0.1 | < 0.01 | 0.001 | 0.015 | 0.005 |
| | 11 | 0.03 | 0.02 | < 0.01 | < 0.01 | < 0.1 | < 0.1 | < 0.01 | 0.001 | 0.015 | 0.005 |
| | 12 | 0.03 | 0.02 | < 0.01 | < 0.01 | < 0.1 | < 0.1 | < 0.01 | 0.001 | 0.015 | 0.005 |
| Ex. | 13 | 0.03 | 0.02 | < 0.01 | < 0.01 | < 0.1 | < 0.1 | < 0.01 | 0.001 | 0.015 | 0.005 |
| | 14 | 0.03 | 0.02 | < 0.01 | < 0.01 | < 0.1 | < 0.1 | < 0.01 | 0.001 | 0.015 | 0.005 |
| | 15 | 0.03 | 0.02 | < 0.01 | < 0.01 | < 0.1 | < 0.1 | < 0.01 | 0.001 | 0.015 | 0.005 |
| | 16 | 0.03 | 0.02 | < 0.01 | < 0.01 | < 0.1 | < 0.1 | < 0.01 | 0.001 | 0.015 | 0.005 |
| | 17 | 0.03 | 0.02 | < 0.01 | < 0.01 | < 0.1 | < 0.1 | < 0.01 | 0.001 | 0.015 | 0.005 |
| | 18 | 0.03 | 0.02 | < 0.01 | < 0.01 | < 0.1 | < 0.1 | < 0.01 | - | 0.015 | 0.005 |
| | 19 | 2.0 | 0.02 | < 0.01 | < 0.01 | < 0.1 | < 0.1 | < 0.01 | 0.001 | 0.015 | 0.005 |
| | 20 | 0.03 | 2.0 | < 0.01 | < 0.01 | < 0.1 | < 0.1 | < 0.01 | 0.001 | 0.015 | 0.005 |
| | 21 | 0.03 | 0.02 | 1.0 | < 0.01 | < 0.1 | < 0.1 | < 0.01 | 0.001 | 0.015 | 0.005 |
| | 22 | 0.03 | 0.02 | < 0.01 | 0.3 | < 0.1 | < 0.1 | < 0.01 | 0.001 | 0.015 | 0.005 |
| | 23 | 0.03 | 0.02 | < 0.01 | < 0.01 | 2.0 | < 0.1 | < 0.01 | 0.001 | 0.015 | 0.005 |
| | 24 | 0.03 | 0.02 | < 0.01 | < 0.01 | < 0.1 | 2.0 | < 0.01 | 0.001 | 0.015 | 0.005 |
| | 25 | 0.03 | 0.02 | < 0.01 | < 0.01 | < 0.1 | < 0.1 | 2.0 | 0.001 | 0.015 | 0.005 |
| | 1 | 0.03 | 0.02 | < 0.01 | < 0.01 | < 0.1 | < 0.1 | < 0.01 | 0.001 | 0.015 | 0.005 |
| | 2 | 0.03 | 0.02 | < 0.01 | < 0.01 | < 0.1 | < 0.1 | < 0.01 | 0.001 | 0.015 | 0.005 |
| | 3 | 0.03 | 0.02 | < 0.01 | < 0.01 | < 0.1 | < 0.1 | < 0.01 | - | 0.015 | 0.005 |
| | 4 | 0.03 | 0.02 | < 0.01 | < 0.01 | < 0.1 | < 0.1 | < 0.01 | 0.001 | 0.015 | 0.005 |
| | 5 | 0.03 | 0.02 | < 0.01 | < 0.01 | < 0.1 | < 0.1 | < 0.01 | 0.001 | 0.015 | 0.005 |
| | 6 | 0.03 | 0.02 | < 0.01 | < 0.01 | < 0.1 | < 0.1 | < 0.01 | 0.001 | 0.015 | 0.005 |
| | 7 | 0.03 | 0.02 | < 0.01 | < 0.01 | < 0.1 | < 0.1 | < 0.01 | 0.001 | 0.015 | 0.005 |
| Comp. Ex. | 8 | 0.03 | 0.02 | < 0.01 | < 0.01 | < 0.1 | < 0.1 | < 0.01 | 0.001 | 0.015 | 0.005 |
| | 9 | 0.03 | 0.02 | < 0.01 | < 0.01 | < 0.1 | < 0.1 | < 0.01 | 0.001 | 0.015 | 0.005 |
| | 10 | 0.03 | 0.02 | < 0.01 | < 0.01 | < 0.1 | < 0.1 | < 0.01 | 0.001 | 0.015 | 0.005 |
| | 11 | 0.03 | 0.02 | < 0.01 | < 0.01 | < 0.1 | < 0.1 | < 0.01 | 0.001 | 0.015 | 0.005 |
| | 12 | 0.03 | 0.02 | < 0.01 | < 0.01 | < 0.1 | < 0.1 | < 0.01 | 0.001 | 0.015 | 0.005 |
| | 13 | 0.03 | 0.02 | < 0.01 | < 0.01 | < 0.1 | < 0.1 | < 0.01 | 0.001 | 0.060 | 0.015 |
| | 14 | 0.03 | 0.02 | < 0.01 | < 0.01 | < 0.1 | < 0.1 | < 0.01 | 0.001 | 0.015 | 0.060 |
| | 15 | 0.03 | 0.02 | < 0.01 | < 0.01 | < 0.1 | < 0.1 | < 0.01 | - | 0.015 | 0.015 |

**Table 2**

| | | Evaluation result | | | | |
|---|---|---|---|---|---|---|
| | | Impact value | | Hardness | | Wear resistance |
| | | Measured value (J/cm²) | Evaluation | Measured value (HV) | Evaluation | |
| | 1 | 9.2 | A | 729 | A | A |
| | 2 | 10.5 | A | 680 | A | A |
| | 3 | 10.5 | A | 680 | A | A |
| | 4 | 10.5 | A | 650 | A | A |
| | 5 | 7.0 | B | 700 | A | A |
| | 6 | 8.0 | B | 720 | A | A |
| | 7 | 10.5 | A | 630 | B | A |
| | 8 | 9.0 | A | 710 | A | A |
| | 9 | 9.0 | A | 700 | A | A |
| | 10 | 9.0 | A | 700 | A | A |
| | 11 | 9.0 | A | 680 | A | A |
| | 12 | 10.0 | A | 700 | A | A |
| Ex. | 13 | 9.0 | A | 735 | A | A |
| | 14 | 9.0 | A | 710 | A | A |
| | 15 | 10.5 | A | 730 | A | A |
| | 16 | 9.0 | A | 700 | A | A |
| | 17 | 9.0 | A | 700 | A | A |
| | 18 | 8.0 | B | 725 | A | A |
| | 19 | 10.5 | A | 710 | A | A |
| | 20 | 10.5 | A | 730 | A | A |
| | 21 | 8.0 | B | 740 | A | A |
| | 22 | 9.0 | A | 735 | A | A |
| | 23 | 7.5 | B | 740 | A | A |
| | 24 | 7.5 | B | 740 | A | A |
| | 25 | 7.5 | B | 740 | A | A |
| | 1 | 12.0 | A | 615 | C | B |
| | 2 | 6.0 | C | 739 | A | A |
| | 3 | 6.0 | C | 730 | A | A |
| | 4 | 11.0 | A | 600 | C | B |
| | 5 | 9.0 | A | 620 | c | B |
| | 6 | 11.0 | A | 600 | c | B |
| | 7 | 9.0 | A | 620 | C | B |
| Comp. Ex. | 8 | 6.0 | C | 700 | A | A |
| | 9 | 5.0 | C | 720 | A | A |
| | 10 | 5.0 | C | 710 | A | A |
| | 11 | 6.0 | C | 700 | A | A |
| | 12 | 5.0 | C | 740 | A | A |
| | 13 | 6.0 | C | 730 | A | A |
| | 14 | 6.0 | C | 730 | A | A |
| | 15 | 5.0 | C | 730 | A | A |

In Table 1, the metal powders in Examples 1 to 25 had the component composition according to the embodiment of the present invention described above. Correspondingly, the shaped layer formed of any metal powder had high toughness that gave a high impact value of 7.0 J/cm² or more. Further, the shaped layer had a high hardness of 630 HV or more and exhibited high wear resistance.

Among them, from the comparison among Examples 1 to 5 and the like, it can be seen that the hardness tends to be improved by increasing the contents of C and V. In Example 9 and Example 11, the contents of Cr and N, which similarly have the effect of improving the hardness, were increased while the content of V was kept low, high hardness was also obtained in these Examples. However, in Example 11 in which the content of N was particularly increased, the hardness obtained was not as high as that in Example 5 in which the contents of V as well as C were increased. This indicates that the carbide of V has a particularly high effect of improving the hardness. At the same time, it indicates that the hardness of the shaped layer can be adjusted by the balance between the contents of C and V and the contents of Cr and N. On the other hand, the comparison among Examples 1, 6, 7, 14, and 15 and the like indicates that the toughness tends to be improved by increasing the content of Ni.

Examples 16 and 17 generally correspond to the alloy composition in Example 1 from which Mo and W were respectively removed. It was found that since the hardness in Example 1 was higher than those in Examples 16 and 17, the addition of Mo and W has an effect of improving the hardness. Example 18 generally corresponds to the alloy composition in Example 1 from which B was removed. It was found that since the impact value in Example 1 was larger than that in Example 18, the addition of B has an effect of increasing the impact value. In Examples 19 to 25, the contents of Cu, Co, Ti, Al, Ta, Nb, and Zr were made larger than those in other Examples, respectively, and from the evaluation results, it was found that Cu and Co mainly have an effect of increasing the impact value due to the improvement of the toughness, and Ti, Ta, Nb, and Zr mainly have an effect of improving the hardness.

Unlike Examples 1 to 25 described above, Comparative Examples 1 to 15 did not satisfy the component composition according to the embodiment of the present invention, and thus did not simultaneously satisfy a high impact value, high hardness, and high wear resistance associated therewith. In Comparative Example 1, the contents of C and V were too small, in Comparative Example 4, the content of Ni was too large, and in Comparative Example 7, N was not contained, so that the hardness and the wear resistance were low. In Comparative Example 5 in which the content of Cr was too small and Comparative Example 6 in which the content of Cr was too large, the hardness and the wear resistance were also low.

On the other hand, in Comparative Example 3, the content of Ni was too small, so that the impact value was small. In Comparative Example 15 in which Ni was not contained, the impact value was also small. In addition, in Comparative Example 2, the content of C was too large, and in Comparative Example 8, the content of N was too large, so that the impact value was small. In each of these Comparative Examples, no sufficient toughness could be obtained.

In Comparative Examples 9 to 12, the contents of Si and Mn, and Mo and W, which are optional elements, were too large, respectively. In addition, in Comparative Examples 13 and 14, the contents of P and S were too large, respectively. Also in these Comparative Examples, the impact value was small, and no sufficient toughness could be obtained.

The embodiments and Examples of the present invention have been described above. The present invention is not particularly limited to these embodiments and Examples, and various modifications may be made.

The present application is based on Japanese Patent Application No. 2025-046206 filed on March 21, 2025, the contents thereof being hereby incorporated by reference.

## Claims

1. A metal powder consisting of, in mass%: $1.5 % \leq C \leq 3.5 % ;$ $0.05 % \leq Si \leq 2.0 % ;$ $0.05 % \leq Mn \leq 2.0 % ;$ $0.1 % \leq Ni \leq 5.0 % ;$ $10 % \leq Cr \leq 20 % ;$ $7.0 % \leq V \leq 15 % ;$ $0.005 % \leq N \leq 0.4 % ,$ $Mo \leq 1.5 % ,$ $W \leq 2.0 % ,$ $Ti \leq 2.0 % ,$ $Ta \leq 3.0 % ,$ $Nb \leq 3.0 % ,$ $Zr \leq 3.0 % ,$ $Cu \leq 2.0 % ,$ $Co \leq 2.0 % ,$ $Al \leq 1.3 % ,$ $B \leq 0.2 % ,$ $P \leq 0.05 % ,$ $S \leq 0.05 % ,$ $O < 0.05 % ,$ $Te < 0.05 % ,$ $As < 0.05 % ,$ $Sn < 0.05 % ,$ $Sb < 0.05 % ,$ $Se < 0.05 % ,$ $Pb < 0.05 % ,$ $Ce < 0.05 % ,$ $Bi < 0.05 % ,$ $Zn < 0.05 % ,$ $Hg < 0.05 % ,$ $Mg < 0.05 % ,$ and $Ca < 0.05 % ,$ with a balance being Fe and inevitable impurities.

2. The metal powder according to claim 1, further satisfying, in mass%, at least one of: $0 % < Mo \leq 1.5 % ,$ $0 % < W \leq 2.0 % ,$ $0 % < Ti \leq 2.0 % ,$ $0 % < Ta \leq 3.0 % ,$ $0 % < Nb \leq 3.0 % ,$ and $0 % < Zr \leq 3.0 % .$

3. The metal powder according to claim 1 or 2, further satisfying, in mass%, at least one of: $0 % < Cu \leq 2.0 %$ and $0 % < Co \leq 2.0 % .$

4. The metal powder according to any one of claims 1 to 3, further satisfying, in mass%, at least one of: $0 % < Al \leq 1.3 %$ and $0 % < B \leq 0.2 % .$

5. Use of the metal powder according to any one of claims 1 to 4, for forming a shaped layer on a surface of a substrate in a metal member.

6. The use according to claim 5, wherein the metal member is a tool.

7. The use according to claim 5 or 6, wherein a plurality of shaped layers are stacked.

8. The use according to one of claims 5 to 7, wherein overlay welding is used.

9. The use according to claim 8, wherein the overlay welding uses laser metal deposition, LMD, welding.

10. The use according to claim 8, wherein the overlay welding uses plasma transferred arc, PTA, welding.

11. A method of manufacturing the metal powder according to any one of claims 1 to 4, the method comprising melting an alloy material and pulverizing it using an atomization method.

12. The method according to claim 11, wherein the pulverized alloy material is appropriately sieved.

13. The method according to claim 12, wherein the sieving removes particles having a particle diameter larger than 250 µm.

14. The method according to claim 12 or 13, wherein the sieving removes particles having a particle diameter smaller than 5 µm.
